# DEMANDE DE BREVET EUROPEEN

(11) **EP 1 607 241 A1**
(43) Date de publication de la demande: **21.12.2005**
(21) Numéro de dépôt: 05291218.5
(22) Date de dépôt: 07.06.2005
(51) Int. Cl.: B60B 27/00, B60C 23/00

(54) **Palier à roulement à passage d'air dans un alésage pourvu de cannelures**

(30) Priorité: 15.06.2004 FR 0451179
(71) Demandeur: S.N.R. ROULEMENTS, 74010 Annecy Cédex (FR)
(72) Inventeur: Mermoud, Gérard, 74330 La Balme de Sillingy (FR)
(74) Mandataire: Breese Derambure Majerowicz

(57) **Abrégé**

L'invention concerne un palier à roulement pour le guidage en rotation d'une roue de véhicule automobile, ledit palier comprenant un organe intérieur tournant (1), un organe extérieur fixe (2) et des corps roulants (13) permettant leur rotation relative autour d'un axe (A), l'organe intérieur (1) comprenant un alésage (10) sur la périphérie duquel des cannelures (11) sont prévues de sorte à permettre l'accouplement en rotation d'un arbre cannelé avec l'organe intérieur (1), ledit palier comprenant un chemin formant passage d'air et comprenant un canal extérieur (25) et un canal intérieur (26) prévus pour traverser de part en part respectivement chacun des organes, dans lequel, en combinaison, le chemin comprend une gorge (27) formée par suppression d'au moins la partie avant d'au moins une cannelure (11), depuis une zone intermédiaire de l'alésage (10) jusqu'à sa face avant, et l'extrémité aval du canal intérieur (26) débouche dans ladite gorge.

## Description

L'invention concerne un palier à roulement pour le guidage en rotation d'une roue de véhicule automobile. Un tel palier comprend typiquement un organe intérieur tournant sur lequel est destinée à être associée ladite roue, un organe extérieur fixe destiné à être solidarisé au châssis dudit véhicule, et des corps roulants disposés entre lesdits organes de sorte à permettre la rotation relative desdits organes autour d'un axe.

L'invention s'applique typiquement à un palier destiné à être utilisé en combinaison avec un système de contrôle et de régulation de la pression du pneu monté sur la roue.

Pour ce faire, il est connu de prévoir un chemin formant passage d'air entre l'organe fixe et l'organe tournant du palier, de sorte à pouvoir alimenter en air le pneu depuis le châssis par l'intermédiaire du palier.

En particulier, le document US-4 932 451 décrit un tel palier dans lequel l'organe intérieur comprend un alésage sur la périphérie duquel des cannelures s'étendant axialement sont prévues de sorte à permettre l'accouplement en rotation d'un arbre cannelé avec l'organe intérieur par emmanchement dudit arbre dans ledit alésage. Ce document prévoit un espace annulaire au niveau de l'emmanchement pour permettre à l'air de circuler dans l'alésage lorsque l'arbre est emmanché.

Toutefois cette solution n'est pas pleinement satisfaisante. En effet, la géométrie de l'espace annulaire est fonction de la position de l'arbre dans l'alésage, position qui peut varier de fabrication ou lors de la durée de vie du palier du fait des efforts qu'il subit. En outre, l'espace annulaire est formé pour partie par un jeu annulaire au niveau de l'accouplement, ce qui n'est pas satisfaisant compte tenu des efforts qui sont transmis entre l'arbre et l'organe tournant.

Ainsi, la solution proposée par le document mentionné ci-dessus pose notamment un problème de fiabilité du palier, et ce tant au niveau de la fonction passage d'air puisque la géométrie de l'espace annulaire n'est pas contrôlable de façon précise, qu'au niveau de la fonction de transmission des efforts.

L'invention vise notamment à résoudre ce problème en proposant un palier à roulement dans lequel le chemin formant passage d'air est réalisé localement au niveau de l'alésage de façon particulièrement simple et limitée, et ce avec une géométrie connue et reproductible.

A cet effet, l'invention propose un palier à roulement pour le guidage en rotation d'une roue de véhicule automobile, ledit palier comprenant un organe intérieur tournant sur lequel est destinée à être associée ladite roue, un organe extérieur fixe destiné à être solidarisé au châssis dudit véhicule, et des corps roulants disposés entre lesdits organes de sorte à permettre la rotation relative desdits organes autour d'un axe, l'organe intérieur comprenant un alésage sur la périphérie duquel des cannelures s'étendant axialement sont prévues de sorte à permettre l'accouplement en rotation d'un arbre cannelé avec l'organe intérieur par emmanchement dudit arbre dans ledit alésage, ledit palier comprenant un chemin formant passage d'air entre l'extérieur de l'organe fixe et la face avant de l'organe tournant, ledit chemin comprenant au moins un canal extérieur et au moins un canal intérieur prévus pour traverser de part en part respectivement chacun des organes, dans lequel, en combinaison, le chemin comprend en outre une gorge formée par suppression d'au moins la partie avant d'au moins une cannelure, depuis une zone intermédiaire de l'alésage jusqu'à sa face avant, et l'extrémité aval du canal intérieur débouche dans ladite gorge.

D'autres objets et avantages de l'invention apparaîtront au cours de la description qui suit, faite en référence aux dessins annexés, dans lesquels :
- la figure 1 est une vue en coupe longitudinale d'un palier à roulement comprenant un chemin formant passage d'air selon un mode de réalisation ;
- la figure 2 est une vue de la face avant du palier de la figure 1 ;
- la figure 3 est une vue partielle en perspective du palier de la figure 1, dans laquelle on visualise l'extrémité aval du canal intérieur du passage d'air débouchant au niveau de l'extrémité arrière de la gorge ;
- la figure 4 est une vue en coupe longitudinale du palier à roulement de la figure 1 dans l'alésage duquel un arbre est disposé.

En relation avec les figures, on décrit un palier à roulement pour le guidage en rotation d'une roue de véhicule automobile.

Le palier comprend un organe tournant 1 destiné à transmettre le mouvement de rotation d'un arbre tournant à la roue du véhicule et un organe fixe 2 destiné à être solidarisé au châssis du véhicule. L'organe tournant 1 est monté en rotation autour d'un axe A à l'intérieur de l'organe fixe 2.

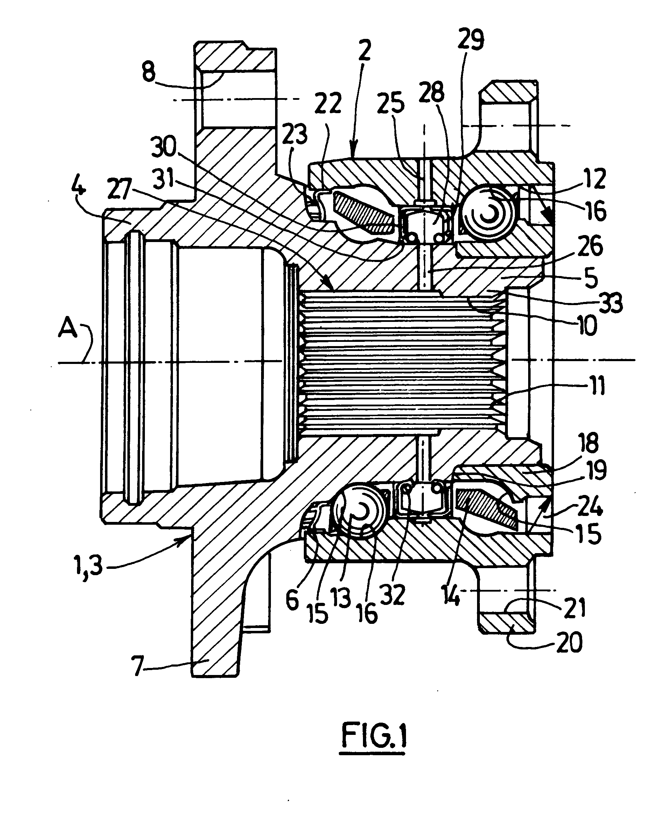

Dans la suite de la description, les termes « axial » ou «longitudinal » et « radial » ou « transversal » font référence à des plans respectivement parallèle et perpendiculaire à l'axe A. Les termes « intérieur » et «extérieur » font référence à des plans longitudinaux situés respectivement à proximité et à distance de l'axe A. Par ailleurs, les termes « avant » et «arrière » font référence à des plans transversaux situés respectivement du côté de la roue, à savoir du côté gauche sur la figure 1, et du côté de l'arbre moteur, à savoir du côté droit sur la figure 1.

L'organe intérieur tournant 1 comprend un moyeu 3 généralement cylindrique d'axe A qui comporte une partie avant 4 permettant l'association de la roue du véhicule et une partie arrière 5 permettant l'association de l'arbre moteur. Le diamètre de la partie avant 4 est supérieur à celui de la partie arrière 5 de sorte que le moyeu 3 présente un épaulement 6.

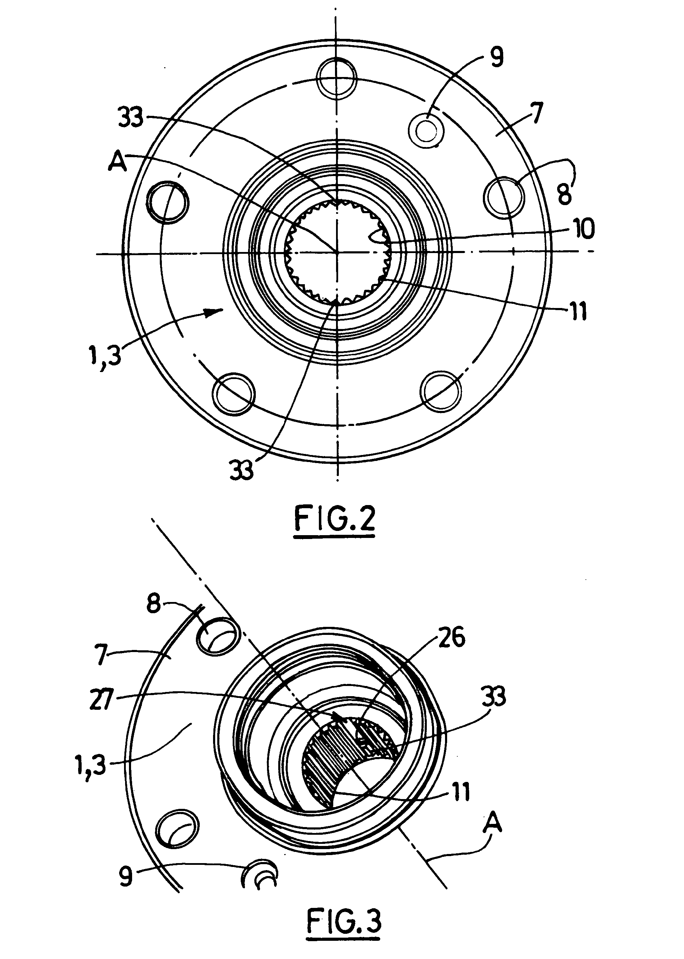

Pour permettre la fixation de la roue au moyeu 3, la partie avant 4 comprend une bride de fixation qui se présente sous la forme générale d'une couronne annulaire 7 s'étendant radialement depuis la surface extérieure de la partie avant 4. Sur les figures 1 et 2, des trous axiaux de fixation 8 sont agencés sur la couronne 7 pour pouvoir coopérer avec des organes de fixation, tels que des boulons, de la roue au moyeu 3. La couronne 7 peut présenter, en outre, un orifice de centrage 9 des disques de freinage.

La partie arrière 5 du moyeu 3 comprend un alésage axial 10 centré sur l'axe A et sur la périphérie duquel des cannelures 11 s'étendant axialement sont prévues. Les cannelures 11 sont destinées à permettre l'accouplement en rotation de l'arbre moteur présentant une extrémité cannelée avec le moyeu 3 par emmanchement de l'extrémité cannelée dans l'alésage 10.

L'organe extérieur fixe 2 est une pièce généralement cylindrique dont l'axe est disposé coaxialement à l'axe A. L'organe fixe 2 comprend également une bride de fixation au châssis formée d'une couronne radiale 20 en saillie de la surface extérieure de l'organe fixe 2 et pourvue de trous de fixation 21. L'organe fixe 2 présente en outre un alésage axial 12 centré sur l'axe A dans lequel la partie arrière 5 du moyeu 3 est montée en rotation.

Dans le mode de réalisation représenté, la rotation relative du moyeu 3 et de l'organe fixe 2 autour de l'axe A est assurée par deux rangées de corps roulants, tels que des billes 13, espacées axialement et disposées dans un espace entre le moyeu 3 et l'organe fixe 2. Les billes 13 sont maintenues à équidistance par une cage 14 et disposées entre des pistes de roulement intérieures 15 et extérieures 16.

Sur la figure 1, une rangée avant de billes 13 est disposée entre une piste de roulement avant 15 réalisée sur la surface extérieure de la partie arrière 5 du moyeu 3 en regard d'une piste de roulement avant 16 réalisée sur l'alésage 12. D'autre part, une rangée arrière de billes 13 est disposée entre une piste de roulement arrière 15 réalisée sur une bague intérieure 18 immobilisée par emmanchement sur la surface extérieure de la partie arrière 5 du moyeu 3, la piste de roulement arrière 15 étant en regard d'une piste de roulement arrière 16 réalisée sur l'alésage 12.

Pour améliorer le positionnement et l'immobilisation de la bague intérieure 18 sur la partie arrière 5, on peut prévoir un usinage de la surface extérieure de cette partie 5 de sorte à former un épaulement arrière 19 formant butée pour la bague intérieure 18. Par ailleurs, dans d'autres modes de réalisation non représentés, la bague intérieure 18 peut comprendre les deux pistes de roulement intérieures 15, la bague intérieure 18 étant alors emmanchée sur la surface extérieure de la partie arrière 5 et venant en butée contre l'épaulement 6.

Les billes 13 sont agencées dans un montage en O. Dans un tel montage, la distance entre les surfaces de contact des billes 13 avec les pistes de roulement extérieures 16 est inférieure à la distance entre les surfaces de contact des billes 13 avec les pistes de roulement intérieures 15. Ceci permet notamment d'éloigner le point d'application des charges à l'extérieur des roulements, réalisant ainsi un montage rigide et compact.

L'étanchéité du roulement à l'avant est réalisée par un joint 22 par exemple en élastomère associé à l'alésage 12 et comprenant des lèvres 23 en contact avec la partie arrière 5 du moyeu 3 et l'épaulement 6. A l'arrière, l'étanchéité est assurée par un joint dynamique 24 disposé entre l'organe fixe 2 et la bague 18.

Pour permettre le contrôle et la régulation de la pression du pneu monté sur la roue, le palier selon l'invention comprend un chemin formant passage d'air entre l'extérieur de l'organe fixe 2 et la face avant du moyeu 3.

En particulier, le chemin comporte un canal extérieur 25 qui s'étend sensiblement radialement au voisinage d'un plan transversal médian de l'organe extérieur fixe 2. Dans le mode de réalisation représenté, le canal extérieur 25 est formé dans l'organe extérieur 2 et comprend une extrémité amont débouchant dans la face extérieure de l'organe extérieur 2. L'extrémité amont est destinée à être reliée à un système, non représenté, de contrôle et de régulation de la pression du pneu monté sur la roue. Un tel système comprend notamment un compresseur, des électrovannes, des dispositifs de commande, d'actionnement et de contrôle de l'électrovanne et du compresseur de sorte à permettre le gonflage ou le dégonflage du pneu. Le canal extérieur 25 comprend également une extrémité aval débouchant au niveau de l'espace entre les pistes de roulement 15, 16 dans lequel sont prévues les billes 13.

Le chemin d'air comprend également deux ensembles disposés symétriquement par rapport à l'axe de rotation A et comprenant chacun un canal intérieur 26 et une gorge 27 dans laquelle le canal 26 débouche. Chaque canal intérieur 26 est formé dans le moyeu 3 et s'étend sensiblement radialement entre une extrémité amont débouchant dans l'espace et une extrémité aval débouchant au niveau de l'extrémité arrière de la gorge 27. Chaque gorge 27 est agencée axialement dans l'alésage 10 et présente une ouverture sur la face avant de l'alésage 10 de sorte à permettre l'alimentation en air du pneu par l'intermédiaire d'un système non représenté.

Ainsi, le chemin d'air permet de mettre en communication de façon étanche le système de contrôle et de régulation et la valve du pneu de sorte à pouvoir alimenter en air ledit pneu.

Pour d'autres modes de réalisation dans lesquels les organes tournant 1 et fixe 2 comprennent plusieurs éléments assemblés, les canaux intérieur 26 et extérieur 25 sont prévus pour traverser de part en part respectivement chacun des organes 1, 2, et en particulier les éléments qui les composent, et ce pour pouvoir assurer la fonction de passage d'air entre l'extérieur de l'organe fixe 2 et la face avant de l'organe mobile 1.

Par ailleurs, pour mettre en communication d'air les extrémités aval et amont de respectivement les canaux extérieur 25 et intérieur 26, le chemin d'air comprend une chambre annulaire étanche 28 prévue entre les rangées de billes 13.

Sur la figure 1, la chambre 28 est formée entre deux joints 29 adjacents disposés de part et d'autre des extrémités aval et amont de respectivement les canaux extérieur 25 et intérieur 26. Les joints 29 comprennent une armature rigide 30 associée à l'organe extérieur 2, par exemple par emmanchement, et une lèvre d'étanchéité élastomérique 31 qui est surmoulée sur l'armature 30 pour venir en contact frottant sur le moyeu 3. Le maintien de la lèvre élastomérique 31 en contact frottant sur le moyeu 3 est assuré par un moyen élastique de type ressort formé par exemple par un anneau 32.

Selon l'invention, chaque gorge 27 est formée par suppression d'au moins la partie avant d'au moins une cannelure 11, depuis une zone intermédiaire de l'alésage 10 jusqu'à sa face avant.

Selon une réalisation, cette zone intermédiaire présente une longueur adaptée pour satisfaire aux exigences liées à la combinaison des deux fonctions que remplit le palier, à savoir la fonction de transmission d'effort de rotation de l'arbre tournant à la roue et la fonction de passage d'air, tout en respectant les contraintes liées à l'espace disponible et à la résistance mécanique. Pour ce faire, on prévoit notamment que la zone intermédiaire soit située sensiblement à une distance de la face avant qui est comprise entre 30% et 70% de la dimension axiale de l'alésage 10. En particulier, sur la figure 1, la zone intermédiaire est située sensiblement à une distance de la face avant qui est supérieure à la moitié de la dimension axiale de l'alésage 10.

En outre, pour pouvoir réaliser en combinaison la transmission des efforts de rotation et le passage d'air dans un encombrement réduit et sans diminuer la résistance mécanique, la partie arrière 33 des cannelures 11 dans lesquelles la gorge 27 est formée a une géométrie en coupe transversale, visualisée sur la figure 2, qui est analogue à celle des autres cannelures 11.

Selon une autre réalisation non représentée, on peut prévoir de supprimer au moins une cannelure 11 sur toute sa longueur, la gorge 27 étant alors réalisée sur toute la dimension axiale de ladite cannelure. Dans cette réalisation, la fonction transmission d'effort est alors assurée au niveau des autres cannelures 11.

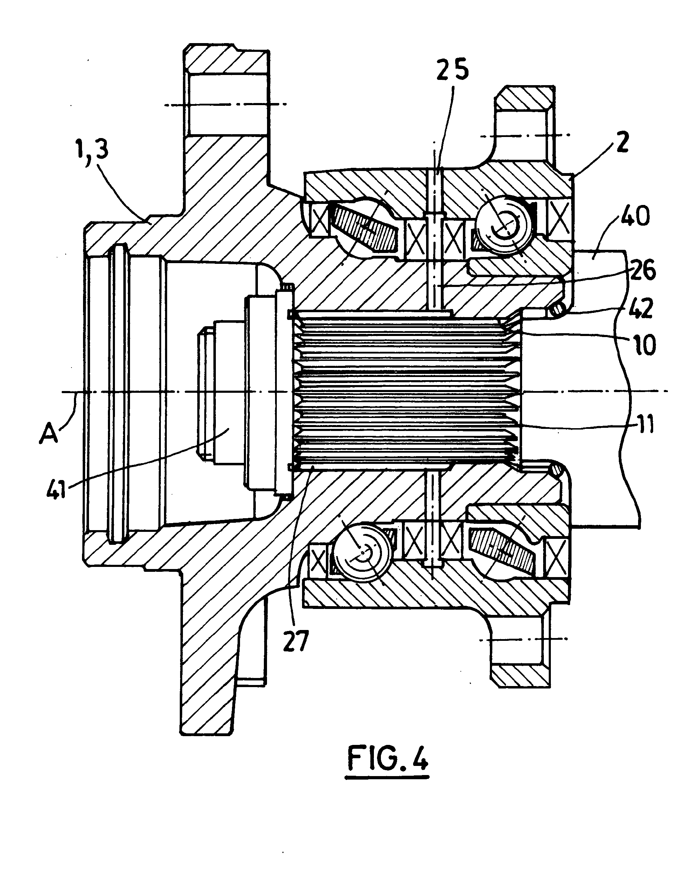

Sur la figure 4 est représenté un montage comprenant un arbre moteur 40 emmanché dans l'alésage 10 et immobilisé axialement dans celui-ci au moyen d'un écrou de serrage 41. L'arbre 40 comprend des cannelures qui sont agencées pour coopérer avec les cannelures 11 de l'alésage 10 de sorte à transmettre les efforts de rotation. Dans cette réalisation, le chemin d'air au niveau de l'alésage 10 est formé dans l'espace formé entre la périphérie de l'arbre 40 et la gorge 27. Par ailleurs, un moyen d'étanchéité arrière, sous la forme d'un joint torique 42, est prévu entre le moyeu 3 et l'arbre 40, de sorte à éviter les fuites d'air depuis la gorge 27 vers la face arrière de l'alésage 10.

## Revendications

1. Palier à roulement pour le guidage en rotation d'une roue de véhicule automobile, ledit palier comprenant un organe intérieur tournant (1) sur lequel est destinée à être associée ladite roue, un organe extérieur fixe (2) destiné à être solidarisé au châssis dudit véhicule, et des corps roulants (13) disposés entre lesdits organes de sorte à permettre la rotation relative desdits organes autour d'un axe (A), l'organe intérieur (1) comprenant un alésage (10) sur la périphérie duquel des cannelures (11) s'étendant axialement sont prévues de sorte à permettre l'accouplement en rotation d'un arbre cannelé (40) avec l'organe intérieur (1) par emmanchement dudit arbre dans ledit alésage, ledit palier comprenant un chemin formant passage d'air entre l'extérieur de l'organe fixe (2) et la face avant de l'organe tournant (1), ledit chemin comprenant au moins un canal extérieur (25) et au moins un canal intérieur (26) prévus pour traverser de part en part respectivement chacun des organes, ledit palier étant **caractérisé en ce que**, en combinaison, le chemin comprend en outre une gorge (27) formée par suppression d'au moins une partie avant d'au moins une cannelure (11), depuis une zone intermédiaire de l'alésage (10) jusqu'à sa face avant, et l'extrémité aval du canal intérieur (26) débouche dans ladite gorge.

2. Palier à roulement selon la revendication 1, **caractérisé en ce que** le canal intérieur (26) débouche dans la gorge (27) au niveau de son extrémité arrière.

3. Palier à roulement selon la revendication 1 ou 2, **caractérisé en ce que** la zone intermédiaire est située sensiblement à une distance de la face avant qui est comprise entre 30% et 70% de la dimension axiale de l'alésage (10).

4. Palier à roulement selon l'une quelconque des revendications 1 à 3, **caractérisé en ce que** la partie arrière (33) de la cannelure (11) dans laquelle la gorge (27) est formée a une géométrie en coupe transversale qui est analogue à celle des autres cannelures (11).

5. Palier à roulement selon la revendication 1, **caractérisé en ce qu'**au moins une cannelure (11) est supprimée sur toute sa longueur de sorte à former une gorge (27).

6. Palier à roulement selon l'une quelconque des revendications 1 à 5, **caractérisé en ce que** les canaux intérieur (26) et extérieur (25) s'étendent sensiblement radialement.

7. Palier à roulement selon l'une quelconque des revendications 1 à 6, **caractérisé en ce que** le canal extérieur (25) comprend une extrémité amont débouchant dans la face extérieure de l'organe fixe (2) et une extrémité aval débouchant au niveau de l'espace dans lequel sont prévues les corps roulants (13), le canal intérieur (26) comprenant une extrémité amont débouchant dans ledit espace, le chemin d'air comprend en outre une chambre annulaire étanche (28) prévue dans ledit espace pour mettre en communication d'air les extrémités aval et amont de respectivement les canaux extérieur (25) et intérieur (26).

8. Palier à roulement selon la revendication 7, **caractérisé en ce que** la chambre (28) est formée entre deux joints (29) adjacents qui sont, de part et d'autre des extrémités aval et amont de respectivement les canaux extérieur (25) et intérieur (26), d'une part associés à l'organe fixe (2) et d'autre part disposés en contact frottant sur l'organe tournant (1).

9. Palier à roulement selon la revendication 8, **caractérisé en ce que** les joints (29) comprennent une armature rigide (30) emmanchée sur l'organe fixe (2) et une lèvre d'étanchéité élastomérique (31) qui est surmoulée sur ladite armature pour venir en contact frottant sur l'organe tournant (1).

10. Palier à roulement selon l'une quelconque des revendications 7 à 9, **caractérisé en ce qu'**il comprend deux rangés de corps roulants (13) qui sont espacés axialement, la chambre annulaire (28) étant prévue entre lesdites rangées.

11. Palier à roulement selon l'une quelconque des revendications 1 à 10, **caractérisé en ce que** le chemin d'air comporte un canal extérieur (25) et deux ensembles comprenant chacun un canal intérieur (26) et une gorge (27) dans laquelle ledit canal débouche, lesdits ensembles étant disposés symétriquement par rapport à l'axe de rotation (A).

12. Palier à roulement selon l'une quelconque des revendications 1 à 11, **caractérisé en ce que** l'organe fixe (2) comprend au moins une piste de roulement extérieure (16) et une bride de fixation (20) au châssis, l'organe tournant (1) comprenant un moyeu (3) sur lequel est immobilisée au moins une bague intérieure (18) comprenant une piste de roulement intérieure (15) disposée en regard de la piste de roulement extérieur (16), ledit moyeu comprenant une bride de fixation (7) de la roue.

13. Palier à roulement selon la revendication 12, **caractérisé en ce que** le canal intérieur (26) est formé dans le moyeu (3).
